# EUROPEAN PATENT APPLICATION

(11) **EP 4 468 392 A2**
(43) Date of publication of application: **27.11.2024**
(21) Application number: 24178057.6
(22) Date of filing: 24.05.2024
(51) Int. Cl.: H01M 4/131, H01M 4/36, H01M 4/485, H01M 4/583, H01M 10/0525

(54) **NEGATIVE ELECTRODE PLATE, ELECTROCHEMICAL APPARATUS, AND ELECTRONIC APPARATUS**

(30) Priority: 25.05.2023 CN 202310597048
(71) Applicant: Ningde Amperex Technology Limited, Zhangwan Town, Jiaocheng District Ningde City Fujian 352100 (CN)
(72) Inventor: YUE, Yingying, Ningde City, Fujian Province, People s Republic of China, 352100 (CN); HUANG, Youjing, Ningde City, Fujian Province, People s Republic of China, 352100 (CN); WEI, Hongmei, Ningde City, Fujian Province, People s Republic of China, 352100 (CN); ZHANG, Nan, Ningde City, Fujian Province, People s Republic of China, 352100 (CN)
(74) Representative: Icosa

(57) **Abstract**

A negative electrode plate includes a negative electrode current collector and a negative electrode active material layer arranged on at least one surface of the negative electrode current collector, where the negative electrode active material layer includes a negative electrode active material, the negative electrode active material includes graphite and niobium composite metal oxide, the niobium composite metal oxide includes at least one of compounds with a molecular formula of TₓNb_{y}M_{z}Oₐ, and a mass ratio of the niobium composite metal oxide to the graphite is (5-50):(50-95). The electrochemical apparatus using such negative electrode plate has good comprehensive performance.

## Description

### TECHNICAL FIELD

This application relates to the field of electrochemical technologies, and in particular, to a negative electrode plate, an electrochemical apparatus, and an electronic apparatus.

### BACKGROUND

Lithium-ion batteries have been widely used in fields such as consumer electronics, electric vehicles, and energy storage due to their characteristics such as high specific energy and power density, long cycle life, and environmental friendliness. As the power source of new energy vehicles, lithium-ion batteries still have many problems in practical applications. For example, the energy density is significantly reduced at low temperature, which in turn affects the cycle life; and the storage performance is poor at high temperature. These seriously limit the large-scale use of lithium-ion batteries. Therefore, how the comprehensive performance of lithium-ion batteries is improved has become an urgent technical problem to be solved by those skilled in the art.

### SUMMARY

An objective of some embodiments of this application is to provide a negative electrode plate, an electrochemical apparatus, and an electronic apparatus, so as to improve the comprehensive performance of the electrochemical apparatus.

It should be noted that in the invention content of this application, a lithium-ion battery is used as an example of an electrochemical apparatus to explain this application. However, the electrochemical apparatus of this application is not limited to the lithium-ion battery. Specific technical solutions are as follows:
A first aspect of this application provides a negative electrode plate including a negative electrode current collector and a negative electrode active material layer arranged on at least one surface of the negative electrode current collector, where the negative electrode active material layer includes a negative electrode active material, the negative electrode active material includes graphite and niobium composite metal oxide, and the niobium composite metal oxide includes at least one of compounds with a molecular formula of TₓNb_{y}M_{z}Oₐ, where T includes at least one of K, Li, Fe, V, W, Cr, Zr, Al, Mg, Zn, Cu, Mo, Na, Ga, P, Tc, Si, Ge, Sn, Ni, Co, Mn, Sr, Y, In, or Ti, M includes at least one of Al, Ti, W, Zr, Nb, In, Ru, Sb, Sr, Y, Ni, Co, Mn, Fe, Gr, Mo, Tc, Sn, Ga, Si, V, or Mg, T and M are different, 0≤x/(x+y+z)≤0.6, 1<a/(x+y+z)<5, and 0≤z/(x+y+z)≤0.5; and a mass ratio of the niobium composite metal oxide to the graphite is (5-50):(50-95). In the negative electrode active material of this application, the niobium composite metal oxide and the graphite are mixed, and the mass ratio of the niobium composite metal oxide to the graphite is controlled within the range of this application, which can solve the problem of poor electronic conductivity of the niobium composite metal oxide, and can ensure normal Li⁺ deintercalation and intercalation of the niobium composite metal oxide at low temperature, that is, can ensure normal charge and discharge. In the process of charging and discharging the electrochemical apparatus, the whole electrochemical apparatus system generates heat, and the generated heat raises the temperature inside the whole electrochemical apparatus, such that the kinetics of the graphite increases with the increase of temperature, thereby improving the low-temperature performance of the graphite. The negative electrode plate including the negative electrode active material of this application is applicable to an electrochemical apparatus, and the electrochemical apparatus has good low-temperature performance, high energy density, and good storage performance. Therefore, the electrochemical apparatus has good comprehensive performance.

In some embodiments of this application, the niobium composite metal oxide has a structure of at least one of a Wadsley-Roth cross-section structure or a tungsten bronze structure. The niobium composite metal oxide having the preceding structure is conducive to the diffusion of Li⁺, and the niobium composite metal oxide has good structural stability, good cycling performance, and good storage performance. This is beneficial to improving the comprehensive performance of the electrochemical apparatus.

In some embodiments of this application, a median particle size by volume D_{V}50₋₁ of the niobium composite metal oxide is 2 µm to 10 µm, and a median particle size by volume D_{V}50₋₂ of the graphite is 10 µm to 23 µm. With the median particle size by volume D_{V}50₋₁ of the niobium composite metal oxide and the median particle size by volume D_{V}50₋₂ of the graphite controlled within the foregoing ranges, the purpose of increasing the compacted density by mixing large and small particles can be achieved, which is conducive to increasing the energy density of the electrochemical apparatus under the condition of good low-temperature performance and storage performance. In some embodiments of this application, the median particle size by volume D_{V}50₋₁ of the niobium composite metal oxide and a particle size by number D_{N}10 of the niobium composite metal oxide satisfy 3≤D_{V}50₋₁D_{N}10≤26. With D_{V}50₋₁/D_{N}10 controlled within the foregoing range, the small particles can be reduced, and a specific surface area of the niobium composite metal oxide can be decreased, so as to achieve the purpose of reducing gas generated during high-temperature storage and caused by side reactions. In some embodiments of this application, the median particle size by volume D_{V}50₋₁ of the niobium composite metal oxide and the median particle size by volume D_{V}50₋₂ of the graphite satisfy D_{V}50₋₂/D_{V}50₋₁≥2. With D_{V}50₋₂/D_{V}50₋₁ controlled within the foregoing range, the purpose of filling the niobium composite metal oxide particles into the graphite gaps can be achieved, so as to increase the compacted density of the negative electrode plate and the energy density of the electrochemical apparatus.

In some embodiments of this application, a specific surface area BET₁ of the niobium composite metal oxide is 0.1 m²/g to 2.0 m²/g, and a specific surface area BET₂ of the graphite is 0.5 m²/g to 10 m²/g. With the specific surface area BET₁ of the niobium composite metal oxide and the specific surface area BET₂ of the graphite controlled within the foregoing ranges, the side reactions between the negative electrode active material and the electrolyte can be reduced, which is conducive to reducing gas generated during high-temperature storage.

In some embodiments of this application, a compacted density of the negative electrode plate is 1.6 g/cm³ to 3.6 g/cm³. Controlling the compacted density of the niobium composite metal oxide and the compacted density of the graphite within the foregoing ranges is conducive to improving the comprehensive performance of electrochemical apparatus.

A second aspect of this application provides an electrochemical apparatus including the negative electrode plate according to the first aspect of this application. Therefore, the electrochemical apparatus has good comprehensive performance.

A third aspect of this application provides an electronic apparatus including the electrochemical apparatus according to the second aspect of this application. Beneficial effects of some embodiments of this application are as follows:
Embodiments of this application provide a negative electrode plate, an electrochemical apparatus, and an electronic apparatus. The negative electrode plate includes a negative electrode current collector and a negative electrode active material layer arranged on at least one surface of the negative electrode current collector, where the negative electrode active material layer includes a negative electrode active material, the negative electrode active material includes graphite and niobium composite metal oxide, and the niobium composite metal oxide includes at least one of compounds with a molecular formula of TₓNb_{y}M_{z}Oₐ, where T includes at least one of K, Li, Fe, V, W, Cr, Zr, Al, Mg, Zn, Cu, Mo, Na, Ga, P, Tc, Si, Ge, Sn, Ni, Co, Mn, Sr, Y, In, or Ti, M includes at least one of Al, Ti, W, Zr, Nb, In, Ru, Sb, Sr, Y, Ni, Co, Mn, Fe, Gr, Mo, Tc, Sn, Ga, Si, V, or Mg, T and M are different, 0≤x/(x+y+z)≤0.6, 1<a/(x+y+z)<5, and 0≤z/(x+y+z)≤0.5; and a mass ratio of the niobium composite metal oxide to the graphite is (5-50):(50-95). In the negative electrode active material of this application, the niobium composite metal oxide and the graphite are mixed, and the mass ratio of the niobium composite metal oxide to the graphite is controlled within the range of this application, which can solve the problem of poor electronic conductivity of the niobium composite metal oxide, and can ensure normal Li⁺ deintercalation and intercalation of the niobium composite metal oxide at low temperature, that is, can ensure normal charge and discharge. In the process of charging and discharging the electrochemical apparatus, the whole electrochemical apparatus system generates heat, and the generated heat raises the temperature inside the whole electrochemical apparatus, such that the kinetics of the graphite increases with the increase of temperature, thereby improving the low-temperature performance of the graphite. The negative electrode plate including the negative electrode active material of this application is applicable to an electrochemical apparatus, and the electrochemical apparatus has good low-temperature performance, high energy density, and good storage performance. Therefore, the electrochemical apparatus has good comprehensive performance. Certainly, when any product or method of this application is implemented, all advantages described above are not necessarily demonstrated simultaneously.

### BRIEF DESCRIPTION OF DRAWINGS

To describe technical solutions in some embodiments of this application or in the prior art more clearly, the following briefly describes the accompanying drawings required for describing some embodiments or the prior art. Apparently, the accompanying drawings in the following descriptions show some embodiments of this application, and persons of ordinary skill in the art may still derive others drawings from these accompanying drawings.
FIG. 1 is a gram capacity-voltage test diagram of Example 2, Example 3, and Example 4 of this application;
FIG. 2 shows a scanning electron microscope (SEM) image of artificial graphite in Comparative Example 1 of this application; and
FIG. 3 shows a SEM image of niobium composite metal oxide in Comparative Example 2 of this application.

### DESCRIPTION OF EMBODIMENTS

The following clearly and completely describes the technical solutions in some embodiments of this application with reference to the accompanying drawings in some embodiments of this application. Apparently, the described embodiments are only some rather than all of these embodiments of this application. Based on some embodiments of this application, all other embodiments obtained by persons of ordinary skill in the art based on this application shall fall within the protection scope of this application.

It should be noted that, in the specific embodiments of this application, an example in which a lithium-ion battery is used as an electrochemical apparatus is used to illustrate this application. However, the electrochemical apparatus of this application is not limited to the lithium-ion battery. Specific technical solutions are as follows:
A first aspect of this application provides a negative electrode plate including a negative electrode current collector and a negative electrode active material layer arranged on at least one surface of the negative electrode current collector, where the negative electrode active material layer includes a negative electrode active material, the negative electrode active material includes graphite and niobium composite metal oxide, and the niobium composite metal oxide includes at least one of compounds with a molecular formula of TₓNb_{y}M_{z}Oₐ. T includes at least one of K, Li, Fe, V, W, Cr, Zr, Al, Mg, Zn, Cu, Mo, Na, Ga, P, Tc, Si, Ge, Sn, Ni, Co, Mn, Sr, Y, In, Hf, or Ti, M includes at least one of Al, Ti, W, Zr, Nb, In, Ru, Sb, Sr, Y, Ni, Co, Mn, Fe, Gr, Mo, Tc, Sn, Ga, Si, V, or Mg, T and M are different, 0≤x/(x+y+z)≤0.6, 1≤a/(x+y+z)<5, and 0≤z/(x+y+z)≤0.5. A mass ratio of the niobium composite metal oxide to the graphite is (5-50):(50-95). For example, the mass ratio of the niobium composite metal oxide to the graphite is 5:95, 10:90, 15:85, 20:80, 25:75, 30:70, 35:65, 40:60, 45:55, 50:50, or any one in a range defined by any two of these ratios.

The niobium composite metal oxide is based on niobium oxide, which co-dissolves with other metal oxides to form a pure-phase M-Nb-O compound with a high theoretical capacity (340 mAh/g to 416 mAh/g). Moreover, the niobium composite metal oxide is contribute to the diffusion of lithium ions (Li⁺), and the diffusion coefficient of Li⁺ is two to three orders of magnitude higher than that of lithium titanate (LTO), which is a common negative electrode active material, so the niobium composite metal oxide has good rate performance. The niobium composite metal oxide works at a temperature of -40°C to 60°C. The temperature has little effect on the kinetics of the niobium composite metal oxide, so the niobium composite metal oxide can be charged and discharged normally even at low temperature. During the charging and discharging process of the electrochemical apparatus, the volume change of the niobium composite metal oxide unit cell is lower than or equal to 10%, so the niobium composite metal oxide has good structural stability, good cycling performance, and good storage performance. However, the niobium composite metal oxides generally have the problem of poor electronic conductivity. In contrast, the negative electrode active material graphite has good electronic conductivity, but its kinetics is greatly influenced by temperature. At low temperature, the reaction activity decreases and the polarization is serious, which leads to a large amount of metal lithium deposition on the surface of the negative electrode plate, thereby seriously affecting the low-temperature performance of the electrochemical apparatus. The decrease of solid diffusion coefficient of Li⁺ in the graphite at low temperature is the main rate-controlling step that leads to the deterioration of capacity characteristics of the electrochemical apparatus. When the electrochemical apparatus is charged at low temperature, a smaller diffusion coefficient hinders the diffusion process of Li⁺ in the graphite, which easily leads to "lithium deposition" on the surface of the graphite particles and causes permanent damage to the electrochemical apparatus.

The energy density of the electrochemical apparatus is positively correlated with the gram capacity of the negative electrode active material, and a higher gram capacity presents a higher energy density. However, the energy density of the electrochemical apparatus is negatively correlated with the voltage plateau of the negative electrode active material. A higher voltage plateau presents a lower energy density of the electrochemical apparatus. Because the lithium-intercalated voltage plateau of the niobium composite metal oxide is higher than that of the graphite, it is necessary to control the ratio of the niobium composite metal oxide to the graphite from the perspective of energy density. When the mass ratio of the niobium composite metal oxide to the graphite is less than 5:95, the content of the niobium composite metal oxide contained in the negative electrode active material is too small, which does not significantly improve the low-temperature performance of the electrochemical apparatus. When the mass ratio of the niobium composite metal oxide to the graphite is greater than 50:50, the content of the niobium composite metal oxide contained in the negative electrode active material is too large, which affects the energy density of the electrochemical apparatus. Firstly, the gram capacity of the niobium composite metal oxide may be lower than that of the graphite. Secondly, the energy density of the electrochemical apparatus is affected because the lithium-intercalated voltage plateau of the niobium composite metal oxide is higher than that of the graphite. Therefore, it is necessary to consider an appropriate ratio of the niobium composite metal oxide to the graphite. In the negative electrode active material of this application, the niobium composite metal oxide and the graphite are mixed, and the mass ratio of the niobium composite metal oxide to the graphite is controlled within the range of this application, which can solve the problem of poor electronic conductivity of the niobium composite metal oxide, and can ensure normal Li⁺ deintercalation and intercalation of the niobium composite metal oxide at low temperature, that is, can ensure normal charge and discharge. In the process of charging and discharging the electrochemical apparatus, the whole electrochemical apparatus system generates heat, and the generated heat raises the temperature inside the whole electrochemical apparatus, such that the kinetics of the graphite increases with the increase of temperature, thereby improving the low-temperature performance of the graphite. The negative electrode plate including the negative electrode active material of this application is applicable to an electrochemical apparatus, and the electrochemical apparatus has good low-temperature performance, high energy density, and good storage performance. Therefore, the electrochemical apparatus has good comprehensive performance.

In this application, low temperature means that the temperature is lower than or equal to -10°C.

The foregoing "negative electrode active material layer arranged on at least one surface of the negative electrode current collector" means that the negative electrode active material layer is arranged on one surface of the negative electrode current collector or the negative electrode active material layer is arranged on two surfaces of the negative electrode current collector. The "surface" may be part or all of the surface of the negative electrode current collector.

Further, the niobium composite metal oxide TₓNb_{y}M_{z}Oₐ includes at least one of Nb₁₆W₅O₅₅, Nb₁₈W₁₆O₉₃, TiNb₂O₇, Nb₁₆W₅O₉₃, Cr_{0.5}Nb_{24.5}O₆₂, Ti₂Nb₁₄O₃₉, TiNb₂₄O₆₂, TiNb₆O₁₇, Ni₂Nb₃₄O₈₇, Cu₂Nb₃₄O₈₇, Cr_{0.5}Nb_{24.5}O₆₂, V₃Nb₁₇O_{5O}, Zn₂Nb₃₄O₈₇, Al_{0.5}Nb_{24.5}O₆₂, MoNb₁₂O₃₃, ZrNb₂₄O₆₂, AlNb₁₁O₂₉, Mg₂Nb₃₄O₈₇, GaNb₁₁O₂₉, Mo₃Nb₁₄O₄₄, CrNb₁₁O₂₉, HfNb₂₄O₆₂, FeNb₁₁O₂₈, GaNb₄₉O₁₂₄, NaNb₁₃O₃₃, Ni₂Nb₃₄O₈₇, TiNb₆O₁₇, WNb₁₂O₃₃, LiNbO₃, Li₃NbO₄, TiCr_{0.5}Nb_{10.5}O₂, VNb₉O₂₅, KNb₅O₁₃, K₆Nb_{10.8}O₃₀, PNb₉O₂₅, Nb₁₈W₈O₆₉, Ti₂Nb₁₀O₂₉, Cr_{0.2}Fe_{0.8}Nb₁₁O₂₉, Fe_{0.8}Mn_{0.2}Nb₁₁O₂₉, Fe_{0.8}V_{0.2}Nb₁₁O₂₉, or Cu_{0.02}Ti_{0.94}Nb_{2.04}O₇.

In some embodiments of this application, the niobium composite metal oxide has a structure of at least one of a Wadsley-Roth (Wadsley-Roth) cross-section structure or a tungsten bronze structure. The niobium composite metal oxide having the preceding structure is conducive to the diffusion of Li⁺, and the niobium composite metal oxide has good structural stability, good cycling performance, and good storage performance. This is beneficial to improving the comprehensive performance of the electrochemical apparatus.

This application has no particular limitation on the control method of the structure of the niobium composite metal oxide, provided that the objective of this application can be achieved. For example, it can be achieved by controlling the sintering temperature, sintering time, types of raw materials, and ratio of different raw materials in the preparation process of the niobium composite metal oxide.

In some embodiments of this application, a median particle size by volume D_{V}50₋₁ of the niobium composite metal oxide is 2 µm to 10 µm, and a median particle size by volume D_{V}50₋₂ of the graphite is 10 µm to 23 µm. For example, D_{V}50₋₁ is 2 µm, 3 µm, 4 µm, 5 µm, 6 µm, 7 µm, 8 µm, 9 µm, 10 µm, or any one in a range defined by any two of these values. D_{V}50₋₂ is 10 µm, 11 µm, 12 µm, 13 µm, 14 µm, 15 µm, 16 µm, 17 µm, 18 µm, 19 µm, 20 µm, 21 µm, 22 µm, 23 µm, or any one in a range defined by any two of these values. To improve the electronic conductivity of the niobium composite metal oxide by the graphite, the median particle size by volume D_{V}50₋₁ of the niobium composite metal oxide and the median particle size by volume D_{V}50₋₂ of the graphite are controlled within the foregoing ranges, and the niobium composite metal oxide and the graphite have a suitable contact area, which is conducive to implementing good electronic conductivity of the niobium composite metal oxide. It can also achieve the purpose of increasing the compacted density by mixing large and small particles, which is conducive to increasing the energy density of the electrochemical apparatus under the condition of good low-temperature performance and storage performance. Therefore, the electrochemical apparatus has good comprehensive performance.

In some embodiments of this application, the median particle size by volume D_{V}50₋₁ of the niobium composite metal oxide and a particle size by number D_{N}10 of the niobium composite metal oxide satisfy 3≤D_{V}50₋₁/D_{N}10≤26. For example, the value of D_{V}50₋₁/D_{N}10 is 3, 5, 8, 11, 14, 17, 20, 23, 26, or any one in a range defined by any two of these values. A smaller particle size of the niobium composite metal oxide particles presents a larger specific surface area and indicates more side reactions with the electrolyte. A better uniformity of particle size of the niobium composite metal oxide presents less number of small particles filled between large particles, which is not conducive to increasing the compacted density of the niobium composite metal oxide. With D_{V}50₋₁/D_{N}10 controlled within the foregoing range, the number of particles with smaller particle size in the niobium composite metal oxide and the uniformity of particle size of the niobium composite metal oxide each are within a suitable range, which is conducive to reducing the reactions between the niobium composite metal oxide and the electrolyte and increasing the compacted density of the niobium composite metal oxide. This is conducive to improving the low-temperature performance, energy density, and storage performance of the electrochemical apparatus. Therefore, the electrochemical apparatus has good comprehensive performance.

This application has no particular limitation on the particle size by number D_{N}10 of the niobium composite metal oxide, provided that the objective of this application can be achieved. For example, the particle size by number D_{N}10 of the niobium composite metal oxide is 0.1 µm to 2 µm.

In some embodiments of this application, the median particle size by volume D_{V}50₋₁ of the niobium composite metal oxide and the median particle size by volume D_{V}50₋₂ of the graphite satisfy D_{V}50₋₂/D_{V}50₋₁≥2. In some embodiments, 2≤D_{V}50₋₂/D_{V}50₋₁≤7. For example, the value of D_{V}50₋₂/D_{V}50₋₁ is 2, 4, 5, 6, 7, 8, 9, 10, 11, 11.5, or any one in a range defined by any two of these values. With D_{V}50₋₂/D_{V}50₋₁ controlled within the foregoing range, the niobium composite metal oxide and the graphite can be more densely packed, which is conducive to increasing the compacted density of the negative electrode plate. In this way, the low-temperature performance, energy density, and storage performance of the electrochemical apparatus are improved. Therefore, the electrochemical apparatus has good comprehensive performance.

In this application, D_{V}50₋₁ means that the diameter of niobium composite metal oxide particles accounting for 50% of the total volume is larger than this value, and the diameter of niobium composite metal oxide particles accounting for 50% of the total volume is smaller than this value, indicating the median particle size of the two parts. D_{V}50₋₂ means that the diameter of graphite particles accounting for 50% of the total volume is larger than this value, and the diameter of graphite particles accounting for 50% of the total volume is smaller than this value, indicating the median particle size of the two parts. D_{N}10 means that the diameter of niobium composite metal oxide particles accounting for 10% of the total number is smaller than this value.

In some embodiments of this application, a specific surface area BET₁ of the niobium composite metal oxide is 0.1 m²/g to 2.0 m²/g, and a specific surface area BET₂ of the graphite is 0.5 m²/g to 10 m²/g. For example, the specific surface area BET₁ of the niobium composite metal oxide is 0.1 m²/g, 0.2 m²/g, 0.4 m²/g, 0.6 m²/g, 0.8 m²/g, 1.0 m²/g, 1.2 m²/g, 1.4 m²/g, 1.6 m²/g, 1.8 m²/g, 2.0 m²/g, or any one in a rang defined by any two of these values. The specific surface area BET₂ of the graphite is 0.5 m²/g, 1 m²/g, 2 m²/g, 3 m²/g, 4 m²/g, 5 m²/g, 6 m²/g, 7 m²/g, 8 m²/g, 9 m²/g, 10 m²/g, or any one in a rang defined by any two of these values. Controlling the specific surface area BET₁ of the niobium composite metal oxide and the specific surface area BET₂ of the graphite within the foregoing ranges is contribute to reducing the side reactions between the negative electrode active material and the electrolyte, reducing the amount of solid electrolyte interphase (SEI) film generated, thereby reducing the blocking effect of SEI film on Li⁺ intercalation, also reducing gas generated during high-temperature storage of the electrochemical apparatus, reducing the thickness swelling rate of the electrochemical apparatus, and improving the storage performance of the electrochemical apparatus. Therefore, the electrochemical apparatus has good comprehensive performance.

Smaller particles of the negative electrode active material present a larger corresponding specific surface area and a shorter migration path of Li⁺, which is conducive to the deintercalation and intercalation of Li⁺ and the exertion of gram capacity, but affects the gas generated during high-temperature storage. This is because a larger specific surface area of the negative electrode active material presents more side reactions between the negative electrode active material and the electrolyte, which leads to gassing and swelling in the electrochemical apparatus and is detrimental to its safety and reliability.

This application has no particular limitation on the control method of the median particle size by volume D_{V}50₋₁, particle size by number D_{N}10, and specific surface area BET₁ of the niobium composite metal oxide, provided that the objective of this application can be achieved. For example, it can be achieved by adjusting the process parameters in the preparation process of the niobium composite metal oxide, for example, crushing and screening. Alternatively, it can be achieved by purchasing from the manufacturer.

This application has no particular limitation on the control method of the median particle size by volume D_{V}50₋₂ and specific surface area BET₂ of the graphite, provided that the objective of this application can be achieved. For example, it can be achieved by purchasing from the manufacturer.

The compacted density of the negative electrode plate is positively correlated with the true density of the negative electrode active material, which has a decisive influence on the compacted density of the negative electrode active material, and the mixing of large and small particles also affects the compacted density of the negative electrode plate, but its influence on the compacted density of the negative electrode plate is smaller than that of the true density.

In some embodiments of this application, the true density of the graphite is lower than that of the niobium composite metal oxide. The true density TD₁ of the niobium composite metal oxide is 4.2 g/cm³ to 5.5 g/cm³, and the true density TD₂ of the graphite is 2.20 g/cm³ to 2.26 g/cm³. For example, the true density TD₁ of the niobium composite metal oxide is 4.2 g/cm³, 4.4 g/cm³, 4.6 g/cm³, 4.8 g/cm³, 5.0 g/cm³, 5.2 g/cm³, 5.4 g/cm³, 5.5 g/cm³, or any one in a range defined by any two of these values. The true density TD₂ of the graphite is 2.20 g/cm³, 2.21 g/cm³, 2.22 g/cm³, 2.23 g/cm³, 2.24 g/cm³, 2.25 g/cm³, 2.26 g/cm³, or any one in a range defined by any two of these values. Controlling the true density TD₁ of the niobium composite metal oxide and the true density TD₂ of the graphite within the foregoing ranges is contribute to increasing the compacted density of the negative electrode plate, thereby increasing the energy density of the electrochemical apparatus.

In this application, the true density refers to an actual volume of solid matter in the volume of the graphite or niobium composite metal oxide in an absolutely dense state, excluding internal pores or gaps between particles.

In some embodiments of this application, a compacted density of the negative electrode plate is 1.6 g/cm³ to 3.6 g/cm³. For example, the compacted density of the negative electrode plate is 1.6 g/cm³, 1.8 g/cm³, 2.0 g/cm³, 2.2 g/cm³, 2.4 g/cm³, 2.6 g/cm³, 2.8 g/cm³, 3.0 g/cm³, 3.2 g/cm³, 3.4 g/cm³, 3.6 g/cm³, or any one in a range defined by any two of these values. The compacted density of the negative electrode plate is controlled within the foregoing range, such that the negative electrode plate has a higher compacted density, thereby having a higher energy density. In this way, the electrochemical apparatus has high energy density on the basis of good low-temperature performance and storage performance. Therefore, the electrochemical apparatus has good comprehensive performance.

This application has no particular limitation on the control method of the compacted density of the negative electrode plate, provided that the objective of this application can be achieved. For example, it can be achieved by controlling the pressure of the negative electrode plate during cold pressing, adjusting the type or average particle size of the negative electrode active material, or the like. This application has no particular limitation on the magnitude of the pressure mentioned above, provided that the objective of this application can be achieved. For example, the pressure is 40t to 80t. This application has no particular limitation on the type of the graphite, provided that the objective of this application can be achieved. For example, the graphite includes but is not limited to artificial graphite and natural graphite.

This application has no particular limitation on the preparation method of the niobium composite metal oxide, provided that the objective of this application can be achieved. For example, the preparation method of the niobium composite metal oxide includes but is not limited to the following steps: selecting NbO₂ and other metal oxides to mix based on a molar ratio of the molecular formula of the niobium composite metal oxide, sintering at 700°C to 1500°C for 2h to 24h after mixing, and crushing and screening to obtain the required niobium composite metal oxide. This application has no particular limitation on the types of "other metal oxides" mentioned above, and those skilled in the art can choose according to their needs, provided that the niobium composite metal oxide within the ranges of this application can be prepared and the objective of this application can be achieved.

The negative electrode current collector is not particularly limited in this application, provided that the objective of this application can be achieved. For example, the negative electrode current collector may include copper foil, copper alloy foil, nickel foil, stainless steel foil, titanium foil, nickel foam, copper foam, or the like. This application has no particular limitation on thicknesses of the negative electrode current collector and the negative electrode active material layer, provided that the objective of this application can be achieved. For example, the thickness of the negative electrode current collector is 6 µm to 10 µm, and the thickness of the negative electrode active material layer is 30 µm to 130 µm.

In some embodiments of this application, the negative electrode active material layer of this application further includes at least one of a negative electrode conductive agent, a thickener, or a negative electrode binder. This application has no particular limitation on the types of the negative electrode conductive agent, the thickener, and the negative electrode binder, provided that the objective of this application can be achieved. This application has no particular limitation on the mass ratio of the negative electrode active material, negative electrode conductive agent, thickener, and negative electrode binder in the negative electrode active material layer, provided that the objective of this application can be achieved. For example, the mass ratio of the negative electrode active material, negative electrode conductive agent, negative electrode binder, and thickener in the negative electrode active material layer is (90-98):(0.5-3):(1-4):(0.5-3).

A second aspect of this application provides an electrochemical apparatus including the negative electrode plate according to the first aspect of this application. Therefore, the electrochemical apparatus has good comprehensive performance, such as good low-temperature performance and storage performance and high energy density.

In some embodiments of this application, the electrochemical apparatus further includes a positive electrode plate. This application has no particular limitation on the positive electrode plate, provided that the objective of this application can be achieved. For example, the positive electrode plate includes a positive electrode current collector and a positive electrode active material layer arranged on at least one surface of the positive electrode current collector. This application has no particular limitation on the type of the positive electrode current collector, provided that the objective of this application can be achieved. For example, the positive electrode current collector may include aluminum foil, aluminum alloy foil, and the like. The positive electrode active material layer in this application includes a positive electrode active material. This application has no particular limitation on the type of the positive electrode active material, provided that the transition metal elements in this application are included and the objective of this application can be achieved. For example, the positive electrode active material may include at least one of lithium nickel cobalt manganate (LiNi_{0.8}Co_{0.1}Mn_{0.1}O₂), lithium nickel cobalt aluminate, lithium iron phosphate, lithium-rich manganese-based materials, lithium cobalt oxide (LiCoO₂), lithium manganate, lithium iron manganese phosphate, or lithium titanate. In this application, the positive electrode active material may further include a non-metal element, for example, the non-metal element includes at least one of fluorine, phosphorus, boron, chlorine, silicon, or sulfur. These elements can further improve stability of the positive electrode active material. In this application, thicknesses of the positive electrode current collector and the positive electrode active material layer are not particularly limited, provided that the objective of this application can be achieved. For example, the thickness of the positive electrode current collector is 5 µm to 20 µm, and preferably 6 µm to 18 µm. The thickness of the positive electrode active material layer is 30 µm to 120 µm. Optionally, the positive electrode active material layer may further include a positive electrode conductive agent and a positive electrode binder. This application has no particular limitation on the types of the positive electrode conductive agent and positive electrode binder in the positive electrode active material layer, provided that the objective of this application can be achieved. This application has no particular limitation on the mass ratio of the positive electrode active material, positive electrode conductive agent, and positive electrode binder in the positive electrode active material layer, and those skilled in the art can choose according to actual needs, provided that the objective of this application can be achieved. For example, the mass ratio of the positive electrode active material, positive electrode conductive agent, and positive electrode binder in the positive electrode active material layer is (90-98):(0.5-5):(1.5-5).

In some embodiments of this application, the electrochemical apparatus further includes a separator, where the separator is arranged between the positive electrode plate and the negative electrode plate, so as to separate the positive electrode plate from the negative electrode plate, prevent internal short circuit of the electrochemical apparatus, allow ions in the electrolyte to migrate freely, and have no effect on the electrochemical charging and discharging process. This application has no particular limitation on the separator, provided that the objective of this application can be achieved. For example, the material of the separator may include but is not limited to at least one of polyethylene (PE) and polypropylene (PP)-based polyolefin (PO), polyester (for example, a polyethylene terephthalate (PET) film), cellulose, polyimide (PI), polyamide (PA), spandex, or aramid. The type of the separator may include at least one of a woven film, a nonwoven film, a microporous film, a composite film, a rolling film, or a spinning film.

In some embodiments of this application, the electrochemical apparatus further includes a packaging bag and an electrolyte, where the electrolyte and an electrode assembly are contained in the packaging bag, and the electrode assembly includes the positive electrode plate, the separator, and the negative electrode plate. This application has no particular limitation on the packaging bag and electrolyte, which may be well-known packaging bags and electrolytes in the field, provided that the objective of this application can be achieved.

This application has no particular limitation on the type of the electrochemical apparatus, which may include any apparatus in which electrochemical reactions occur. In some embodiments, the electrochemical apparatus may include but is not limited to a lithium metal secondary battery, a lithium-ion secondary battery (a lithium-ion battery), a sodium-ion secondary battery (a sodium-ion battery), a lithium polymer secondary battery, and a lithium-ion polymer secondary battery (a lithium-ion polymer battery).

A process for preparing the electrochemical apparatus of this application is well known to persons skilled in the art, and is not particularly limited in this application. For example, the process may include but is not limited to the following steps: stacking the positive electrode plate, the separator, and the negative electrode plate in sequence, performing operations such as winding and folding on the stack as required to obtain an electrode assembly having a winding structure, placing the electrode assembly into a packaging bag, injecting an electrolyte into the packaging bag, and sealing the packaging bag to obtain the electrochemical apparatus; or stacking the positive electrode plate, the separator, and the negative electrode plate in sequence, fixing four corners of the overall laminated structure with a tape to obtain an electrode assembly having a laminated structure, placing the electrode assembly into a packaging bag, injecting an electrolyte into the packaging bag, and sealing the packaging bag to obtain the electrochemical apparatus. In addition, if necessary, an overcurrent prevention element, a guide plate, and the like may be placed in the packaging bag to prevent pressure increase, overcharge, and overdischarge in the electrochemical apparatus.

A third aspect of this application provides an electronic apparatus including the electrochemical apparatus according to the second aspect of this application. Therefore, the electronic apparatus has good use performance.

The electronic apparatus of this application is not particularly limited, and the electronic apparatus may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

### Examples

The following describes some embodiments of this application more specifically by using examples and comparative examples. Various tests and evaluations are performed in the following methods.

Test method and device

### Test for D_{V}50₋₁, D_{V}50₋₂, and D_{N}10

The particle size distributions of the graphite and niobium composite metal oxide in the negative electrode active material were tested using Malvern particle size tester, and D_{V}50₋₁ and D_{N}10 of the niobium composite metal oxide and D_{V}50₋₂ of the graphite were obtained. The specific tests were carried out in accordance with the national standard GB/T 19077-2016 "Particle Size Analysis - Laser Diffraction Methods".

### Test for specific surface areas BET₁ and BET₂

With a specific surface area analyzer (Tristar II 3020M), the specific surface areas of the graphite and niobium composite metal oxides in the negative electrode active materials of all examples and comparative examples were measured using the nitrogen adsorption method. The specific test was carried out in accordance with the national standard GB/T 19587-2017 "Determination of the Specific Surface Area of Solids by Gas Adsorption Using the BET Method".

### Test for compacted density of negative electrode plate

Compacted density = mass of negative electrode active material layer per unit area (g/cm²)/thickness of negative electrode active material layer (cm).

### Test for gram capacity

The negative electrode plates of all examples and comparative examples were assembled with Li sheets to form coin cells (coin cell), and the coin cells were discharged to a gram capacity of 5.0 mV. The specific discharge process was as follows: The coin cells were discharged at 0.05C to 5.0 mV and charged at 0.1C to 3.0 V, and the capacities of the coin cells were recorded as gram capacities at this point. 0.05C is a current value under 0.05 times the designed gram capacity, and 0.1C is a current value under 0.1 times the designed gram capacity.

### Test for low-temperature performance

The lithium-ion batteries in all examples and comparative examples were charged to 4.3 V at 25°C at a rate of 0.2C, and the charging capacities at this point were denoted as C₁; the lithium-ion batteries were charged to 4.3 V at -20°C at 1C, and the charging capacities at this point were denoted as C₂; and the capacity retention rate R was equal to C₂/C₁×100%. R indicates the low-temperature performance, and a higher value R indicates better low-temperature performance.

### Test for storage performance

The lithium-ion batteries of all examples and comparative examples were stored at 85°C for 12h, and the thickness changes of the lithium-ion batteries before and after storage were recorded. The thickness swelling rate T=(thickness after storage-thickness before storage)/thickness before storage×100%. T is used to represent the storage performance, and a smaller T value indicates better storage performance.

### Example 1

### <Preparation of negative electrode active material>

Preparation of niobium composite metal oxide: Nb₁₆W₅O₅₅ was synthesized using solid-state method. The raw materials were NbO₂ and WO₂, which were well mixed at a molar ratio of 16:5 and then sintered at 1150°C for 10h. Then crushing and sieving were carried out on the resulting product to obtain Nb₁₆W₅O₅₅ with D_{V}50₋₁ of 3.8 µm, D_{N}10 of 0.35 µm, and BET₁ of 1.5 m²/g.

The niobium composite metal oxide Nb₁₆W₅O₅₅ prepared above and artificial graphite were mixed at a mass ratio of 5:95 to obtain the negative electrode active material. The specific surface area BET₂ of the artificial graphite was 0.65 m²/g, and the median particle size by volume D_{V}50₋₂ of the artificial graphite was 15.9 µm. The structure of the niobium composite metal oxide was Wadsley-Roth cross-section structure.

### <Preparation of negative electrode plate>

The negative electrode active material prepared above, negative electrode conductive agent acetylene black, negative electrode binder styrene-butadiene rubber (SBR, with a weight-average molecular weight of 1×10⁵ to 1.1×10⁵), and thickener sodium carboxymethyl cellulose (CMCNa) were mixed at a mass ratio of 95:2:2:1, a resulting solution was added with deionized water as a solvent, and a resulting product was stirred with a stirrer until a negative electrode slurry with a solid content of 70wt% and a uniform system was prepared. The negative electrode slurry was uniformly applied onto a surface of a negative electrode current collector copper foil with a thickness of 6 µm, followed by drying at 90°C to obtain a negative electrode plate having a negative electrode active material layer coated on one surface (with a thickness of 130 µm). The foregoing steps were repeated on the other surface of the copper foil to obtain the negative electrode plate coated with the negative electrode active material layer on two surfaces. The negative electrode plate was cold pressed, cut, and welded with tabs, to obtain the negative electrode plate with a size of 76 mm×867 mm for use.

### <Preparation of positive electrode plate>

Positive electrode active material lithium nickel cobalt manganate (molecular formula LiNi_{0.5}Co_{0.2}Mn_{0.3}O₂, NCM523 for short), positive electrode conductive agent acetylene black, and positive electrode binder polyvinylidene fluoride (PVDF, weight-average molecular weight of 2×10⁵ to 10×10⁵) were mixed at a mass ratio 94:3:3, a resulting solution was added with N-methylpyrrolidone (NMP) as a solvent, and a resulting product was stirred with a vacuum mixer until a positive electrode slurry with a solid content of 75wt% and a uniform system was prepared. The positive electrode slurry was uniformly applied onto a positive electrode current collector aluminum foil with a thickness of 6 µm, followed by drying at 90°C to obtain a positive electrode plate having a positive electrode active material layer coated on one surface. The foregoing steps were repeated on the other surface of the aluminum foil to obtain the positive electrode plate coated with the positive electrode active material layer on two surfaces. The positive electrode plate was cold pressed, cut, and welded with tabs, to obtain the positive electrode plate with a size of 74 mm×851 mm for use.

### <Preparation of separator>

A porous polyethylene (PE) film with a thickness of 8 µm was used as the separator.

### <Preparation of electrolyte>

Under an environment with a water content lower than 10 ppm, a lithium salt lithium hexafluorophosphate and a non-aqueous organic solvent (a mass ratio of ethylene carbonate (EC), propylene carbonate (PC), polypropylene (PP), and diethyl carbonate (DEC) was 1:1:1:1) were prepared into an electrolyte with a lithium salt concentration of 1.0 mol/L.

### <Preparation of lithium-ion battery>

The positive electrode plate, the separator, and the negative electrode plate were stacked in sequence, such that the separator was sandwiched between the positive electrode plate and the negative electrode plate for separation, and the stacked product was wound to obtain an electrode assembly. The electrode assembly was arranged in a packaging bag aluminum-plastic film, and was dehydrated at 80°C. Then the above-mentioned electrolyte was injected and packaging was carried out, followed by processes such as formation, degassing, and shaping to obtain the lithium-ion battery.

### Example 2 to Example 4

Example 2 to Example 4 were the same as Example 1 except that related preparation parameters were adjusted according to Table 1.

### Example 5

Preparation of niobium composite metal oxide: Nb₁₆W₅O₉₃ was synthesized using solid-state method. The raw materials were NbO₂ and WO₂, which were well mixed at a molar ratio of 16:5 and then sintered at 1200°C for 10h. Then crushing and sieving were carried out on the resulting product to obtain Nb₁₆W₅O₉₃ with D_{V}50₋₁ of 6.2 µm, D_{N}10 of 0.5 µm, and BET₁ of 1.2 m²/g.

The rest was the same as that in Example 3.

### Example 6

Preparation of niobium composite metal oxide: TiNb₂O₇ was synthesized using solid-state method. The raw materials were NbO₂ and TiO₂, which were well mixed at a molar ratio of 2:1 and then sintered at 1150°C for 10h. Then crushing and sieving were carried out on the resulting product to obtain TiNb₂O₇ with D_{V}50₋₁ of 5.8 µm, D_{N}10 of 0.26 µm, and BET₁ of 1.3 m²/g.

The rest was the same as that in Example 3.

### Example 7

Preparation of niobium composite metal oxide: Fe_{0.8}Nb₁₁Mn_{0.2}O₂₉ was synthesized using solid-state method. The raw materials were Fe₂O₃, Nb₂O₅, and Mn₂O₃, which were well mixed at a molar ratio of 0.8:11:0.2 and then sintered at 130°C for 4h. Then crushing and sieving were carried out on the resulting product to obtain Fe_{0.8}Nb₁₁Mn_{0.2}O₂₉ with D_{V}50₋₁ of 3.4 µm, D_{N}10 of 0.3 µm, and BET₁ of 1.6 m²/g.

The rest was the same as that in Example 3.

### Example 8 to Example 16

Example 8 to Example 16 were the same as Example 3 except that related preparation parameters were adjusted according to Table 1.

### Comparative Example 1 to Comparative Example 4

Comparative Example 1 to Comparative Example 4 were the same as Example 1 except that related preparation parameters were adjusted according to Table 1.

Preparation parameters and performance parameters of examples and comparative examples are shown in Table 1 and Table 2.

**Table 1**

| | Negative electrode active material | a/(x+y+z) | z/(x+y+z) | x/(x+y+z) | Mass ratio of niobium composite metal oxide to graphite | D_{V}50₋₁ (µm) | D_{N}10 (µm) | D_{V}50₋₂ (µm) | D_{V}50₋₁/D_{N}10 | D_{V}50₋₂/D_{V}50₋₁ | BET₁ (m²/g) | **BET₂** (m²/g) |
|---|---|---|---|---|---|---|---|---|---|---|---|---|
| Example 1 | Nb₁₆W₅O₅₅, artificial graphite | 2.6 | 0.24 | 0 | 5:95 | 3.8 | 0.35 | 15.9 | 10.9 | 4.2 | 1.5 | 0.65 |
| Example 2 | Nb₁₆W₅O₅₅, artificial graphite | 2.6 | 0.24 | 0 | 10:90 | 3.8 | 0.35 | 15.9 | 10.9 | 4.2 | 1.5 | 0.65 |
| Example 3 | Nb₁₆W₅O₅₅, artificial graphite | 2.6 | 0.24 | 0 | 30:70 | 3.8 | 0.35 | 15.9 | 10.9 | 4.2 | 1.5 | 0.65 |
| Example 4 | Nb₁₆W₅O₅₅, artificial graphite | 2.6 | 0.24 | 0 | 50:50 | 3.8 | 0.35 | 15.9 | 10.9 | 4.2 | 1.5 | 0.65 |
| Example 5 | Nb₁₆W₅O₉₃, artificial graphite | 4.4 | 0.24 | 0 | 30:70 | 6.2 | 0.5 | 15.9 | 12.4 | 2.6 | 1.2 | 0.65 |
| Example 6 | TiNb₂O₇, artificial graphite | 2.3 | 0.33 | 0 | 30:70 | 5.8 | 0.26 | 15.9 | 22.3 | 2.7 | 1.3 | 0.65 |
| Example 7 | Fe_{0.8}Nb₁₁Mn_{0.2}O₂₉, artificial graphite | 2.5 | 0.02 | 0.07 | 30:70 | 3.4 | 0.3 | 15.9 | 11.3 | 4.7 | 1.6 | 0.65 |
| Example 8 | Nb₁₆W₅O₅₅, artificial graphite | 2.6 | 0.24 | 0 | 30:70 | 5.1 | 0.35 | 20.4 | 14.6 | 4.0 | 1.35 | 0.6 |
| Example 9 | Nb₁₆W₅O₅₅, artificial graphite | 2.6 | 0.24 | 0 | 30:70 | 10 | 0.85 | 23 | 11.8 | 2.3 | 0.48 | 0.45 |
| Example 10 | Nb₁₆W₅O₅₅, artificial graphite | 2.6 | 0.24 | 0 | 30:70 | 3 | 0.6 | 15.9 | 5 | 5.3 | 1.47 | 0.65 |
| Example 11 | Nb₁₆W₅O₅₅, artificial graphite | 2.6 | 0.24 | 0 | 30:70 | 4.8 | 0.24 | 15.9 | 20 | 3.3 | 1.53 | 0.65 |
| Example 12 | Nb₁₆W₅o₅₅, artificial graphite | 2.6 | 0.24 | 0 | 30:70 | 3.8 | 1.2 | 15.9 | 3.2 | 4.2 | 0.1 | 0.65 |
| Example 13 | Nb₁₆W₅O₅₅, artificial graphite | 2.6 | 0.24 | 0 | 30:70 | 3.8 | 0.15 | 15.9 | 25.3 | 4.2 | 1.91 | 0.65 |
| Example 14 | Nb₁₆W₅O₅₅, artificial graphite | 2.6 | 0.24 | 0 | 30:70 | 3.8 | 0.35 | 23 | 10.9 | 6.1 | 1.5 | 0.45 |
| Example 15 | Nb₁₆W₅O₅₅, artificial graphite | 2.6 | 0.24 | 0 | 30:70 | 3.8 | 0.35 | 16 | 10.9 | 4.2 | 1.5 | 10 |
| Example 16 | Nb₁₆W₅O₅₅, artificial graphite | 2.6 | 0.24 | 0 | 30:70 | 5.5 | 1 | 23 | 5.5 | 4.2 | 0.2 | 0.45 |
| Comparative Example 1 | Artificial graphite | \ | \ | \ | 0:100 | \ | \ | 15.9 | \ | \ | \ | 0.65 |
| Comparative Example 2 | Nb₁₆W₅O₅₅ | 2.6 | 0.24 | 0 | 100:0 | 3.8 | 0.15 | \ | 25.3 | \ | 1.91 | \ |
| Comparative Example 3 | Nb₁₆W₅O₅₅, artificial graphite | 2.6 | 0.24 | 0 | 2:98 | 3.8 | 0.15 | 15.9 | 25.3 | 4.2 | 1.91 | 0.65 |
| Comparative Example 4 | Nb₁₆W₅O₅₅, artificial graphite | 2.6 | 0.24 | 0 | 98:2 | 3.8 | 0.15 | 15.9 | 25.3 | 4.2 | 1.91 | 0.65 |

| | | | | | | | | | | | | |
|---|---|---|---|---|---|---|---|---|---|---|---|---|
| Note: "\" in Table 1 means that there is no related preparation parameter. | | | | | | | | | | | | |

**Table 2**

| | Compacted density of negative electrode plate (g/cm³) | Gram capacity (mAh/g) | Capacity retention rate R (%) | Thickness swelling rate T (%) |
|---|---|---|---|---|
| Example 1 | 1.83 | 368 | 43 | 9.1 |
| Example 2 | 1.9 | 367 | 56 | 8.3 |
| Example 3 | 2.19 | 361 | 80 | 8.6 |
| Example 4 | 2.48 | 355 | 83 | 8.7 |
| Example 5 | 2.16 | 353 | 73 | 9.2 |
| Example 6 | 2.11 | 354 | 71 | 8.9 |
| Example 7 | 2.17 | 345 | 74 | 8.1 |
| Example 8 | 2.13 | 352 | 81 | 8.1 |
| Example 9 | 2.11 | 343 | 77 | 6.1 |
| Example 10 | 2.2 | 356 | 84 | 8.4 |
| Example 11 | 2.11 | 353 | 82 | 8.8 |
| Example 12 | 2.19 | 350 | 80 | 5.2 |
| Example 13 | 2.19 | 351 | 81 | 11 |
| Example 14 | 2.2 | 344 | 77 | 7.1 |
| Example 15 | 2.18 | 357 | 85 | 10.2 |
| Example 16 | 2.16 | 352 | 82 | 8.4 |
| Comparative Example 1 | 1.71 | 370 | 31 | 12.4 |
| Comparative Example 2 | 3 | 340 | 87 | 8.7 |
| Comparative Example 3 | 1.73 | 369 | 34 | 11.6 |
| Comparative Example 4 | 2.95 | 341 | 85 | 10.3 |

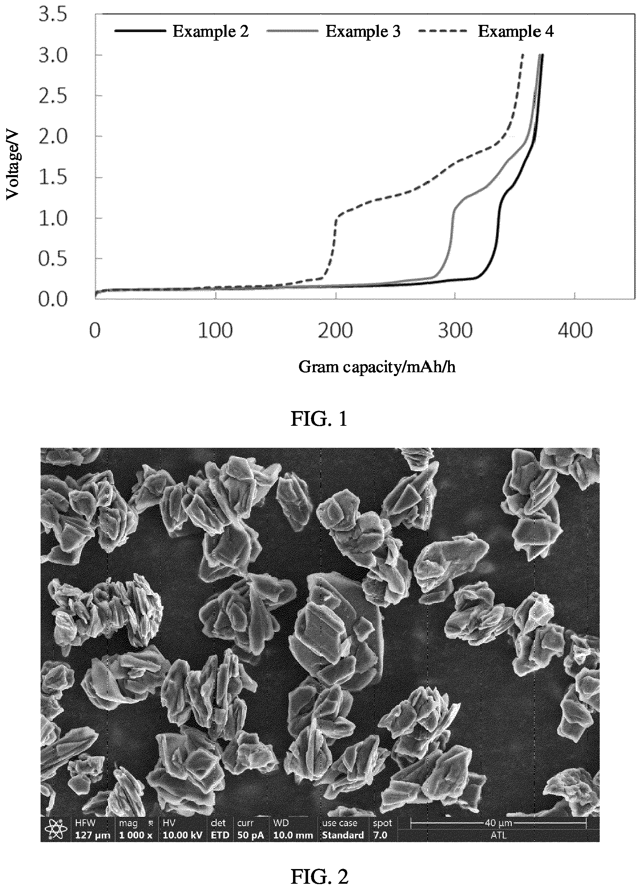

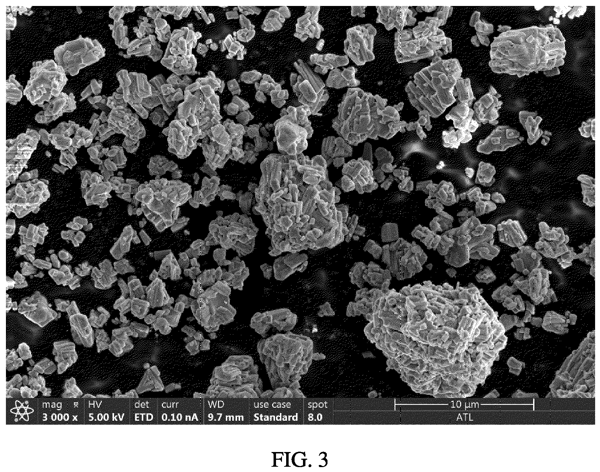

As can be seen from Examples 1 to 16 and Comparative Examples 1 to 4, in the lithium-ion battery of some examples of this application, the negative electrode active material includes graphite and niobium composite metal oxide TₓNb_{y}M_{z}Oₐ and the mass ratio of niobium composite metal oxide to graphite falls within the range of this application, such that the lithium-ion battery of some examples of this application has higher gram capacity and capacity retention rate R and lower thickness swelling rate T, which indicates that the lithium-ion battery of this application has higher energy density and good low-temperature performance and high-temperature storage performance. Therefore, the lithium-ion battery has good comprehensive performance. In the lithium-ion battery of the comparative examples, one of the graphite and the niobium composite metal oxide TₓNb_{y}M_{z}Oₐ is selected as the negative electrode active material, or the mass ratio of the niobium composite metal oxide to the graphite does not fall within the range of this application, such that at least one of the gram capacity, capacity retention rate R, or thickness swelling rate T of the lithium-ion battery in the comparative examples is poorer, indicating that at least one of the energy density, low-temperature performance, or high-temperature storage performance of the lithium-ion battery in the comparative examples is poorer. Therefore, the lithium-ion battery has poorer comprehensive performance. FIG. 1 is a gram capacity-voltage test diagram of Examples 2, 3, and 4. In the negative electrode active materials of Examples 2, 3, and 4, the use amount of the niobium composite metal oxide shows an increasing trend. As can be seen from FIG. 1, with the increase of the use amount of the niobium composite metal oxide, the voltage plateau of the negative electrode active material increases, which means that the voltage plateau of the lithium-ion battery decreases (because the voltage plateau of lithium-ion battery = positive potential-negative potential), and the energy density of the lithium-ion battery decreases. However, as can be seen from the table, the lithium-ion battery in which the use amount of the niobium composite metal oxide is within the range of this application has a higher gram capacity, which indicates that the negative electrode active material with the mass ratio of the niobium composite metal oxide to the graphite controlled within the range of this application can be used in the lithium-ion battery, and the lithium-ion battery can have a higher energy density. FIG. 2 shows a scanning electron microscope (SEM) image of artificial graphite in Comparative Example 1 of this application; and FIG. 3 shows a SEM image of niobium composite metal oxide in Comparative Example 2 of this application. It can be seen from the comparison between FIG. 2 and FIG. 3 that the particle size of the artificial graphite in FIG. 2 is larger than that of the niobium composite metal oxide in FIG. 3.

The mass ratio of the niobium composite metal oxide to the graphite usually affects the energy density, low-temperature performance, and high-temperature storage performance of the lithium-ion battery. As can be seen from Examples 1 to 4 and Comparative Examples 1 to 4, the lithium-ion battery with the mass ratio of the niobium composite metal oxide to the graphite within the range of this application has higher gram capacity and capacity retention rate R and lower thickness swelling rate T, indicating that the lithium-ion battery has higher energy density and good low-temperature performance and high-temperature storage performance, and has good comprehensive performance. In the lithium-ion batteries of Comparative Example 1 and Comparative Example 3, the artificial graphite and the mixture of niobium composite metal oxide and graphite at the mass ratio of 2:98 are selected as the negative electrode active materials respectively. Such negative electrode active material has higher gram capacity, but lower capacity retention rate R and higher thickness swelling rate T. In the lithium-ion batteries of Comparative Example 2 and Comparative Example 4, the niobium composite metal oxide and the mixture of niobium composite metal oxide and graphite at the mass ratio of 98:2 are selected as the negative electrode active materials respectively. Such negative electrode active material has higher capacity retention rate R and lower thickness swelling rate T, but lower gram capacity. It is well known to those skilled in the art that it is difficult to increase the gram capacity. Therefore, the lithium-ion batteries of Comparative Examples 1 to 4 have poor comprehensive performance.

The types of the niobium composite metal oxides usually affect the energy density, low-temperature performance, and high-temperature storage performance of the lithium-ion battery. As can be seen from Example 3 and Examples 5 to 7, the lithium-ion battery with the types of the niobium composite metal oxides within the range of this application has higher gram capacity and capacity retention rate R and lower thickness swelling rate T, indicating that the lithium-ion battery has higher energy density and good low-temperature performance and high-temperature storage performance, and has good comprehensive performance.

The median particle size by volume D_{V}50₋₁ of the niobium composite metal oxide, the median particle size by volume D_{V}50₋₂ of the graphite, the specific surface area BET₁ of the niobium composite metal oxide, and the specific surface area BET₂ of the graphite usually affect the energy density, low-temperature performance, and high-temperature storage performance of the lithium-ion battery. As can be seen from Example 3 and Examples 5 to 16, the lithium-ion battery with the median particle size by volume D_{V}50₋₁ of the niobium composite metal oxide, the median particle size by volume D_{V}50₋₂ of the graphite, the specific surface area BET₁ of the niobium composite metal oxide, and the specific surface area BET₂ of the graphite within the ranges of this application has higher gram capacity and capacity retention rate R, and lower thickness swelling rate T, indicating that lithium-ion battery has higher energy density and good low-temperature performance and high-temperature storage performance, and has good comprehensive performance.

The ratio D_{V}50₋₁/D_{N}10 of the median particle size by volume D_{V}50₋₁ of the niobium composite metal oxide to the particle size by number D_{N}10 of the niobium composite metal oxide usually affects the energy density, low-temperature performance, and high-temperature storage performance of the lithium-ion battery. As can be seen from Example 3 and Examples 5 to 16, the lithium-ion battery with the value of D_{V}50₋₁/D_{N}10 within the range of this application has higher gram capacity and capacity retention rate R and lower thickness swelling rate T, indicating that the lithium-ion battery has higher energy density and good low-temperature performance and high-temperature storage performance.

The compacted density of the negative electrode plate usually affects the gram capacity, low-temperature performance, and high-temperature storage performance of the lithium-ion battery. As can be seen from Examples 1 to 16, the lithium-ion battery with the compacted density of the negative electrode plate within the range of this application has higher gram capacity and capacity retention rate R and lower thickness swelling rate T, indicating that the lithium-ion battery has higher energy density and good low-temperature performance and high-temperature storage performance, and has good comprehensive performance.

The ratio D_{V}50₋₂/D_{V}50₋₁ of the median particle size by volume D_{V}50₋₂ of the graphite to the median particle size by volume D_{V}50₋₁ of the niobium composite metal oxide usually affects the gram capacity, low-temperature performance, and high-temperature storage performance of the lithium-ion battery. As can be seen from Example 3, Examples 5 to 11, and Example 14, the lithium-ion battery with the value of D_{V}50₋₂/D_{V}50₋₁ within the range of this application has higher gram capacity and capacity retention rate R and lower thickness swelling rate T, indicating that the lithium-ion battery has higher energy density and good low-temperature performance and high-temperature storage performance, and has good comprehensive performance.

It should be noted the term "include", "comprise", or any of their variants are intended to cover a non-exclusive inclusion, so that a process, a method, an article, or a device that includes a list of elements not only includes those elements but also includes other elements that are not expressly listed, or further includes elements inherent to such process, method, article, or device.

Some embodiments in this specification are described in a related manner. For a part that is the same or similar between these embodiments, reference may be made between these embodiments. Each embodiment focuses on differences from other embodiments. The foregoing descriptions are merely preferred examples of this application, and are not intended to limit the protection scope of this application. Any modification, equivalent replacement, improvement, or the like made without departing from the spirit and principle of this application shall fall within the protection scope of this application.

## Claims

1. A negative electrode plate, comprising a negative electrode current collector and a negative electrode active material layer disposed on at least one surface of the negative electrode current collector; the negative electrode active material layer comprises a negative electrode active material, **characterized in that**, the negative electrode active material comprises graphite and niobium composite metal oxide, and the niobium composite metal oxide comprises at least one of compounds with a molecular formula of TₓNb_{y}M_{z}Oₐ, wherein T comprises at least one of K, Li, Fe, V, W, Cr, Zr, Al, Mg, Zn, Cu, Mo, Na, Ga, P, Tc, Si, Ge, Sn, Ni, Co, Mn, Sr, Y, In, Hf, or Ti, M comprises at least one of Al, Ti, W, Zr, Nb, In, Ru, Sb, Sr, Y, Ni, Co, Mn, Fe, Gr, Mo, Tc, Sn, Ga, Si, V, or Mg, T and M are different, 0≤x/(x+y+z)≤0.6, 1<a/(x+y+z)<$, and 0≤z/(x+y+z)≤0.5; and
a mass ratio of the niobium composite metal oxide to the graphite is (5-50):(50-95).

2. The negative electrode plate according to claim 1, **characterized in that**, the niobium composite metal oxide has a structure of at least one of a Wadsley-Roth cross-section structure or a tungsten bronze structure.

3. The negative electrode plate according to claim 1 or 2, **characterized in that**, a median particle size by volume D_{V}50₋₁ of the niobium composite metal oxide is 2 µm to 10 µm, and a median particle size by volume D_{V}50₋₂ of the graphite is 10 µm to 23 µm.

4. The negative electrode plate according to claim 3, **characterized in that**, the median particle size by volume D_{V}50₋₁ of the niobium composite metal oxide and a particle size by number D_{N}10 of the niobium composite metal oxide satisfy 3 ≤ D_{V}50₋₁/D_{N}10 ≤ 26.

5. The negative electrode plate according to claim 3 or 4, **characterized in that**, D_{V}50₋₂/D_{V}50₋₁ ≥ 2.

6. The negative electrode plate according to any one of claims 1 to 5, **characterized in that**, a specific surface area BET₁ of the niobium composite metal oxide is 0.1 m²/g to 2.0 m²/g, and a specific surface area BET₂ of the graphite is 0.5 m²/g to 10 m²/g.

7. The negative electrode plate according to any one of claims 1 to 6, **characterized in that**, a compacted density of the negative electrode plate is 1.6 g/cm³ to 3.6 g/cm³.

8. The negative electrode plate according to any one of claims 1 to 7, **characterized in that**, a compacted density of the negative electrode plate is 1.7 g/cm³ to 2.0 g/cm³.

9. The negative electrode plate according to any one of claims 6 to 8, **characterized in that**, the specific surface area BET₁ of the niobium composite metal oxide is 0.2 m²/g to1.8 m²/g.

10. The negative electrode plate according to any one of claims 6 to 9, **characterized in that**, the specific surface area BET₁ of the niobium composite metal oxide is 0.4 m²/g to1.6 m²/g.

11. The negative electrode plate according to any one of claims 6 to 10, **characterized in that**, the specific surface area BET₁ of the niobium composite metal oxide is 1.2 m²/g to1.6 m²/g.

12. The negative electrode plate according to any one of claims 1 to 11, **characterized in that**, a specific surface area BET₂ of the graphite is 0.6 m²/g to 8 m²/g.

13. The negative electrode plate according to any one of claims 1 to 12, **characterized in that**, a specific surface area BET₂ of the graphite is 0.6 m²/g to 4 m²/g.

14. An electrochemical apparatus, comprising the negative electrode plate according to any one of claims 1 to 13.

15. An electronic apparatus, comprising the electrochemical apparatus according to claim 14.
